# EUROPÄISCHE PATENTANMELDUNG

(11) **EP 3 945 291 A1**
(43) Veröffentlichungstag der Anmeldung: **02.02.2022**
(21) Anmeldenummer: 20187922.8
(22) Anmeldetag: 27.07.2020
(51) Int. Cl.: G01D 5/244

(54) **BEFESTIGUNGSELEMENT, INSBESONDERE DREHMOMENTSTÜTZE, UND MASCHINE**

(71) Anmelder: Siemens Aktiengesellschaft, 80333 München (DE)
(72) Erfinder: Joseph, Eric, 91217 Hersbruck (DE); Grillenberger, Reiner, 91575 Windsbach (DE); Maidorn, Mischa, 90547 Stein (DE)

(57) **Zusammenfassung**

Die Erfindung betrifft ein Befestigungselement (1), insbesondere eine Drehmomentstütze, zur Befestigung eines Drehgebers (21) mit einer Geberwelle an einem Gehäuse (22) aufweisend einen Ring (2), mittels welchem die Geberwelle umschließbar ist, zumindest zwei erste Ausnehmungen (3), mittels welchen das Befestigungselement (1) am Drehgeber (21) bzw. am Gehäuse (22) befestigbar ist, zumindest zwei zweite Ausnehmungen (4), mittels welchen das Befestigungselement (1) am Gehäuse (22) bzw. am Drehgeber (21) befestigbar ist, und zumindest zwei Stege (5), welche sich von einem jeweiligen Verbindungsbereich (6) des Ringes (2) jeweils nach radial außen oder innen erstrecken und welche jeweils eine der zweiten Ausnehmungen (4) aufweisen. Weiterhin betrifft die Erfindung eine Maschine (23) mit einem derartigen Befestigungselement (1). Um ein verbessertes Befestigungselement (1) bzw. eine verbesserte Maschine (23) bereitzustellen, wird vorgeschlagen, dass der jeweiligen Verbindungsbereich (6) in positiver Umfangsrichtung (30) näher an einer von zwei benachbarten ersten Ausnehmungen (3) angeordnet ist und sich der jeweilige Steg (6) in negativer Umfangsrichtung (31) in Richtung der anderen der zwei benachbarten ersten Ausnehmungen (3) erstreckt.

## Beschreibung

Die Erfindung betrifft ein Befestigungselement, insbesondere eine Drehmomentstütze, zur Befestigung eines Drehgebers mit einer Geberwelle an einem Gehäuse aufweisend einen Ring, mittels welchem die Geberwelle umschließbar ist, zumindest zwei erste Ausnehmungen, mittels welchen das Befestigungselement am Drehgeber bzw. am Gehäuse befestigbar ist, zumindest zwei zweite Ausnehmungen, mittels welchen das Befestigungselement am Gehäuse bzw. am Drehgeber befestigbar ist, und zumindest zwei Stege, welche sich von einem jeweiligen Verbindungsbereich des Ringes jeweils nach radial außen oder innen erstrecken und welche jeweils eine der zweiten Ausnehmungen aufweisen.

Weiterhin betrifft die Erfindung eine Maschine, insbesondere eine elektrische Maschine, aufweisend ein Gehäuse, einen Drehgeber, ein derartiges Befestigungselement, mittels welchem der Drehgeber an dem Gehäuse befestigt ist, und eine Maschinenwelle, welche drehfest mit der Geberwelle verbunden ist.

Ein derartiges Befestigungselement kommt beispielsweise bei Elektromotoren zum Einsatz, die mit einem Drehgeber ausgerüstet sind. Wird ein Hohlwellengeber bei Elektromotoren zur Erfassung der Drehzahl oder der Winkellage des Rotors eingesetzt, so muss das Gehäuse des Drehgebers gegenüber dem Gehäuse des Motors durch eine steife Verbindung abgestützt und am Mitdrehen gehindert werden. Ein Drehgeber (bzw. Drehwinkelgeber oder Rotary Encoder) ist dabei ein Sensor für Drehwinkel, der meist digitale Ausgangssignale liefert, die am anderen Ende der Sensorleitung im Auswertegerät decodiert werden müssen. Deshalb wird er auch als Encoder (englisch: rotary encoder) bezeichnet. "Drehgeber" kann auch als Oberbegriff für alle Winkellagegeber verwendet werden.

Rundlauffehler bei der Befestigung des Gebers, Toleranzen bei der Fertigung, Wärmedehnung der Welle, sowie Schwingungen, die durch den Motor verursacht werden, führen allerdings immer wieder zu Dauerbrüchen in den vorhandenen Befestigungstechniken, was Folgeschäden verursachen kann, da die Motorüberwachung nicht mehr gewährleistet ist.

Aus der EP 2 216 630 A1 ist eine Drehmomentstütze zum drehsteifen Verbinden eines Drehgebers mit einer Anschlussfläche bekannt.

Eine Aufgabe der Erfindung ist es, ein Befestigungselement und eine Maschine bereitzustellen, welche insbesondere die genannten Nachteile überwinden.

Eine Lösung der Aufgabe ergibt sich durch ein Befestigungselement der eingangs genannten Art dadurch, dass der jeweiligen Verbindungsbereich in positiver Umfangsrichtung näher an einer von zwei benachbarten ersten Ausnehmungen angeordnet ist und sich der jeweilige Steg in negativer Umfangsrichtung in Richtung der anderen der zwei benachbarten ersten Ausnehmungen erstreckt.

Weiterhin ergibt sich eine Lösung der Aufgabe durch eine Maschine der eingangs genannten Art dadurch, dass die Maschine das vorgeschlagene Befestigungselement aufweist.

Die ersten Ausnehmungen und/oder die zweiten Ausnehmungen erlauben insbesondere, das Befestigungselement an dem Drehgeber bzw. an dem Gehäuse mittels Gewindestiften, Schrauben oder Bolzen zu befestigen. Dabei können die ersten Ausnehmungen und/oder die zweiten Ausnehmungen bspw. als Bohrungen ausgeführt werden. Vorzugsweise ist der Ring in axialer Richtung flach ausgebildet, insb. im Verhältnis zu seiner Erstreckung in radialer Richtung. Dabei kann der Ring bzw. das komplette Befestigungselement aus einem Blech ausgestanzt und ggf. anschließend geformt werden.

Der Ring weist dabei Verbindungsbereiche auf, an welchen die jeweiligen Stege angeordnet sind. Bspw. sind dabei der Ring und die jeweiligen Stege einstückig ausgebildet. Der jeweilige Verbindungsbereich ist dabei nicht in der Mitte zwischen zwei benachbarten ersten Ausnehmungen angeordnet, sondern zu einer der beiden benachbarten ersten Ausnehmungen in positiver Umfangsrichtung hin verschoben. Der jeweilige Steg erstreckt sich dann in negativer Umfangsrichtung zu der anderen der beiden benachbarten ersten Ausnehmungen, d. h. zur weiter entfernten ersten Ausnehmung der beiden benachbarten ersten Ausnehmungen. Bei einer Ausgestaltung des Befestigungselementes mit zwei ersten Ausnehmungen und zwei sich nach radial außen erstreckenden Stegen kann der Ring zusammen mit den beiden Stegen dabei insbesondere die Form eines Paragraphsymbols "§" annehmen. Andere Ausgestaltungen des Befestigungselementes mit drei ersten Ausnehmungen und drei Stegen bzw. vier ersten Ausnehmungen und vier Stegen, usw., sind ebenfalls umsetzbar.

Durch die vorgeschlagene Ausgestaltung des Befestigungselementes, insbesondere die in Umfangsrichtung verlängerte Verbindung zwischen dem Drehgeber und dem Gehäuse, werden insbesondere folgende Vorteile erzielt. So kann bspw. die Steifigkeit des Befestigungselementes in Umfangsrichtung erhöht werden, d.h. es wird eine größere Torsionssteifigkeit erreicht, was Messfehler bei Winkelmesssystemen verringert bzw. verhindert. Taumelbewegungen des Gebers, d. h. eine umlaufende Verkippung der Geberwelle, verursacht durch fehlerhaftes Ausrichten des Gebers bzw. der Geberwelle, können absorbiert werden, ohne dass dabei nennenswerte mechanische Spannungen in dem Befestigungselement verursacht werden. Dadurch kann die Lebensdauer des Befestigungselementes teils erheblich verlängert werden. Hinzu kommt, dass axiale Verschiebungen ausgeglichen werden können, welche durch Wärmeausdehnung und Fertigungstoleranzen verursacht werden. Dies wird insbesondere durch die in Umfangsrichtung verlängerte Verbindung zwischen dem Drehgeber und dem Gehäuse erreicht, die in Umfangsrichtung eine vergleichsweise hohe Steifigkeit aufweist, jedoch in axialer Richtung beweglich genug bleibt, um derartige axiale Verschiebungen auszugleichen.

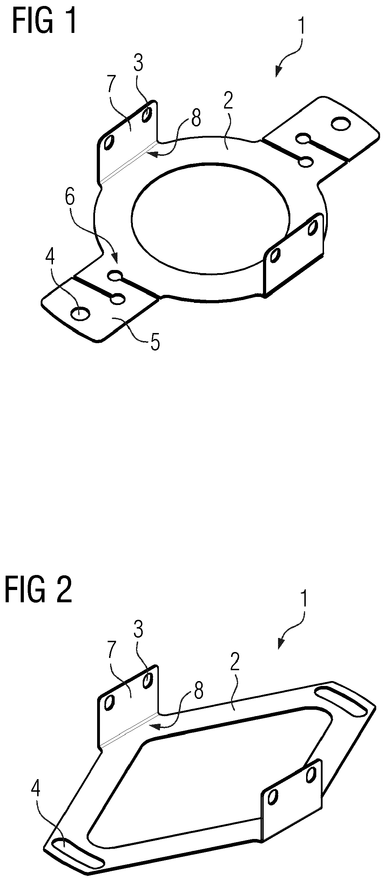

Besonders vorteilhaft ist an dem vorgeschlagenen Befestigungselement die erwähnte Verringerung der mechanischen Spannung, die im Folgenden genauer erläutert wird. Dazu wird die mechanische Spannung für das vorgeschlagene Befestigungselement und für zwei andere Befestigungselemente, die in den Figuren 1 und 2 dargestellt sind und weiter unten kurz erläutert werden, in entsprechenden Simulationen berechnet, wobei die jeweiligen Befestigungselemente verschiedenen Lasten ausgesetzt werden. Die Lasten entsprechen dabei einer axialen Verschiebung, wobei bei den Simulationen ein Wert von 2 mm angenommen wird. Dies spiegelt eine Wärmedehnung einer Welle, bspw. einer Rotorwelle einer als Elektromotor ausgestalteten Maschine wider. Weiterhin berücksichtigen die Lasten eine umlaufende Verkippung bzw. Verdrehung, welche in Richtung der Hochachse und der Querachse variiert wird. Dies spiegelt eine fehlerhafte Ausrichtung der Geberwelle wider. Bei dem Befestigungselement gemäß der Figur 2 werden dabei zwei mögliche Ausrichtung innerhalb der Langlöcher berücksichtigt.

Die Ergebnisse der Simulationen sind in der Tabelle unten zusammengestellt, wobei die Ergebnisse für die verschiedenen Befestigungselemente wie folgt benannt sind:

| Verdrehung (in °) | | Vergleichsspannungen (in MPa) | | | |
|---|---|---|---|---|---|
| Hochachse | Querachse | "A" | "B1" | "B2" | "C" |
| -5 | -5 | 1335 | 1192 | 1519 | 291 |
| 0 | -5 | 1152 | 1399 | 1263 | 204 |
| 5 | -5 | 1275 | 1742 | 1540 | 217 |
| -5 | 0 | 835 | 734 | 946 | 172 |
| 0 | 0 | 619 | 599 | 665 | 86 |
| 5 | 0 | 832 | 744 | 940 | 172 |
| -5 | 5 | 1283 | **1748** | 1542 | 216 |
| 0 | 5 | 1148 | 1401 | 1262 | 205 |
| 5 | 5 | **1349** | 1204 | 1520 | **293** |
| **Maximum** | | **1349** | **1748** | | **293** |

| | | | | | |
|---|---|---|---|---|---|
| "A": das Befestigungselement gemäß Figur 1, "B1" bzw. "B2": das Befestigungselement gemäß Figur 2 mit einer ersten bzw. zweiten Ausrichtung innerhalb der Langlöcher "C": ein Ausführungsbeispiel des vorgeschlagenen Befestigungselements gemäß den Figuren 3 und 4. | | | | | |

Durch das vorgeschlagene Befestigungselement können die üblicherweise während des Betriebs auftretenden mechanischen Spannungen im Vergleich zu den beiden Befestigungselementen gemäß den Figuren 1 und 2 somit beträchtlich verringert werden: bei dem Ausführungsbeispiel gemäß den Figuren 3 und 4 sogar um beachtliche 78% bzw. 83%. Aber auch andere Ausgestaltungen des vorgeschlagenen Befestigungselementes bewirken eine deutliche Verringerung der während des Betriebs auftretenden mechanischen Spannungen. Dies geht unter anderem einher mit einer deutlich verlängerten Lebensdauer des vorgeschlagenen Befestigungselementes.

Bei einer vorteilhaften Ausgestaltung der Erfindung ist die jeweilige zweite Ausnehmung im Bereich des Endes des jeweiligen Steges in negativer Umfangsrichtung angeordnet. Dadurch kann die Länge des jeweiligen Steges in Umfangsrichtung besonders gut ausgenutzt werden gleichzeitig Material eingespart werden. Weiterhin weist das vorgeschlagene Befestigungselement dadurch eine besonders große Torsionssteifigkeit auf.

Bei einer weiteren vorteilhaften Ausgestaltung der Erfindung ist der jeweilige Steg in negativer Umfangsrichtung außerhalb des jeweiligen Verbindungsbereichs im Wesentlichen ringsegmentförmig ausgestaltet. Je nach seiner Erstreckung in Umfangsrichtung, bspw. eine Viertel Umdrehung bzw. 90°, weist der jeweilige Steg somit die Gestalt eines entsprechenden Teils eines vollständigen Ringes auf, bspw. ein Viertel eines vollständigen Ringes. Auch dadurch kann die Torsionssteifigkeit des vorgeschlagenen Befestigungselementes erhöht werden und somit eine besonders langlebige Ausgestaltung des vorgeschlagenen Befestigungselementes erzielt werden.

Bei einer weiteren vorteilhaften Ausgestaltung der Erfindung erstreckt sich der jeweilige Steg in negativer Umfangsrichtung bis zu der anderen der zwei benachbarten ersten Ausnehmungen oder über die andere der zwei benachbarten ersten Ausnehmungen hinaus. Diese beiden Ausgestaltungen ermöglichen eine besonders große Torsionssteifigkeit des vorgeschlagenen Befestigungselementes.

Bei einer weiteren vorteilhaften Ausgestaltung der Erfindung weist das Befestigungselement zwei erste Ausnehmungen, zwei zweite Ausnehmungen und zwei Stege auf, die sich jeweils paarweise diametral gegenüberliegen, wobei der jeweilige Verbindungsbereich in positiver Umfangsrichtung um 30° bis 50°, vorzugsweise 40°, gegenüber der Mitte zwischen zwei benachbarten ersten Ausnehmungen versetzt angeordnet ist, und wobei sich der jeweilige Steg ausgehend von dem jeweiligen Verbindungsbereich in negativer Umfangsrichtung auf einer Länge von 100° bis 120°, vorzugsweise 107,5° in Richtung der anderen der zwei benachbarten ersten Ausnehmungen erstreckt.

Diese Ausgestaltung des Befestigungselementes ermöglicht dessen Fertigung aus einem Stück, bspw. einem Blech, insbesondere, wenn weitere Stege für die ersten Ausnehmungen vorgesehen sind und sich diese weiteren Stege in dieselbe radiale Richtung wie die Stege für die zweiten Ausnehmungen erstrecken. Das Befestigungselement kann zum Beispiel durch Stanzen oder Lasern aus einem Stück hergestellt werden. Dank der erläuterten des jeweiligen Steges können dabei die erläuterte hohe Torsionssteifigkeit sowie die Toleranz gegenüber axialen Verschiebungen erreicht werden.

Bei einer weiteren vorteilhaften Ausgestaltung der Erfindung ist zumindest der jeweilige Steg, insb. das ganze Befestigungselement aus Stahl, insb. Federstahl. Dies erlaubt eine robuste Ausführung des Befestigungselementes und dies wiederum eine hohe Kundenakzeptanz.

Bei einer weiteren vorteilhaften Ausgestaltung der Erfindung weist das Befestigungselement zumindest zwei weitere Stege auf, welche sich von einem jeweiligen weiteren Verbindungsbereich des Ringes jeweils nach radial außen oder innen erstrecken und welche jeweils eine der ersten Ausnehmungen aufweisen.

Bei einer weiteren vorteilhaften Ausgestaltung der Erfindung erstreckt sich der jeweilige weitere Steg dabei in axialer Richtung zum Drehgeber bzw. zum Gehäuse, wobei die jeweilige erste Ausnehmung im Bereich des axialen Endes des jeweiligen weiteren Steges angeordnet ist.

Bei einer weiteren vorteilhaften Ausgestaltung der Erfindung umfasst die Maschine einen Elektromotor oder einen Elektrogenerator. Zusätzlich kann die Maschine bspw. ein Getriebe und/oder andere Teile einer größeren Anlage umfassen.

Oftmals werden besonders gute Ergebnisse erzielt, wenn sich die Stege und ggf. die weiteren Stege vom Ring nach radial außen erstrecken.

Im Folgenden wird die Erfindung anhand der in den Figuren dargestellten Ausführungsbeispiele näher beschrieben und erläutert. Es zeigen:
- FIG 1: eine erste Drehmomentstütze,
- FIG 2: eine zweite Drehmomentstütze,

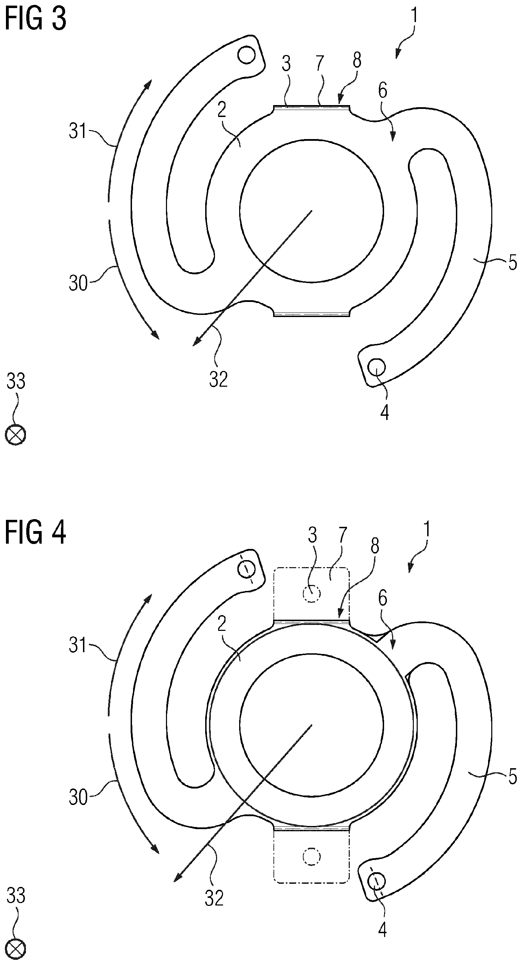

- FIGs 3&4: ein Ausführungsbeispiel eines erfindungsgemäßen Befestigungselementes, und

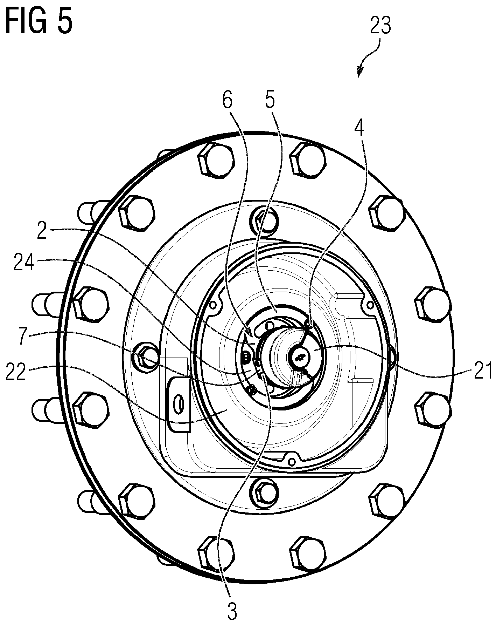

- FIG 5: einen Ausschnitt eines Ausführungsbeispiels einer erfindungsgemäßen Maschine.

Figur 1 zeigt eine erste Drehmomentstütze. Die Drehmomentstütze weist einen Ring 2 auf, durch welchen eine Geberwelle hindurchgeführt werden kann. Weiterhin weist die Drehmomentstütze zwei Stege 5 mit jeweils einer zweiten Ausnehmung 4 sowie zwei weitere Stege 7 mit jeweils zwei ersten Ausnehmungen 3 auf. Dabei sind die Paare von Stegen und weiteren Stegen in Umfangsrichtung um 90° zueinander versetzt angeordnet. Mithilfe der ersten Ausnehmungen 3 kann die Drehmomentstütze 1 an einem Drehgeber befestigt werden und mithilfe der zweiten Ausnehmungen 4 an einem Gehäuse einer Maschine.

Figur 2 zeigt eine zweite Drehmomentstütze mit einer gegenüber der in Figur 1 dargestellten ersten Drehmomentstütze modifizierten Geometrie. Dabei bezeichnen gleiche Bezugszeichen wie in Figur 1 gleiche Gegenstände.

Die Figuren 3 und 4 zeigen ein Ausführungsbeispiel eines erfindungsgemäßen Befestigungselementes 1. Das als Drehmomentstütze ausgeführte Befestigungselement 1 weist einen Ring 2 auf, mittels welchem eine Geberwelle umschließbar ist. Weiterhin weist das Befestigungselement 1 zwei Stege 5 auf, welche sich von einem jeweiligen Verbindungsbereich 6 des Ringes 2 jeweils nach radial außen (vgl. Pfeil 32) erstrecken und welche an ihrem jeweiligen Ende in Umfangsrichtung jeweils zwei Ausnehmungen 4 aufweisen. Mittels der beiden zweiten Ausnehmungen 4 ist das Befestigungselement 1 an einem Gehäuse bzw. an einem Drehgeber befestigbar. Das Befestigungselement weist weiterhin zwei weitere Stege 7 auf, welche sich von einem jeweiligen weiteren Verbindungsbereich 8 des Ringes 2 jeweils zunächst nach radial außen und anschließend sich in axiale Richtung (vgl. Symbol ⊗, 33) erstrecken und welche jeweils eine erste Ausnehmung 3 aufweisen. Mittels der beiden ersten Ausnehmungen 3 ist das Befestigungselement 1 an einem Drehgeber bzw. an einem Gehäuse befestigbar.

Wie in den Figuren 3 und 4 dargestellt, ist der jeweilige Verbindungsbereich 6 in positiver Umfangsrichtung 30 näher an einer der beiden ersten Ausnehmungen 3 angeordnet, wobei sich der jeweilige Steg 6 in negativer Umfangsrichtung 31 in Richtung der anderen ersten Ausnehmung 3 erstreckt.

Die jeweilige zweite Ausnehmung 4 ist dabei im Bereich des Endes des jeweiligen Steges 5 in negativer Umfangsrichtung 31 angeordnet. Weiterhin ist der jeweilige Steg 5 in negativer Umfangsrichtung 31 außerhalb des jeweiligen Verbindungsbereiches im Wesentlichen ringsegmentförmig ausgestaltet. Der jeweilige Verbindungsbereich 6 ist dabei in positiver Umfangsrichtung 30 um 40° gegenüber der Mitte zwischen zwei ersten Ausnehmungen 3 versetzt angeordnet. Dabei erstreckt sich der jeweilige Steg 5 ausgehend von dem jeweiligen Verbindungsbereich 6 in negativer Umfangsrichtung 31 auf einer Länge von 107,5° in Richtung der anderen ersten Ausnehmung.

Vorzugsweise ist das Befestigungselement 1 dabei aus Stahl, insbesondere Federstahl gefertigt.

Figur 5 zeigt einen Ausschnitt eines Ausführungsbeispiels einer erfindungsgemäßen Maschine 23. Die Maschine 23 weist ein Gehäuse 22 auf, welches mehrstückig ausgebildet sein kann und dabei auch einen Deckel umfassen kann, wie in Figur 5 angedeutet. Weiterhin weist die Maschine 23 einen Drehgeber 21 und ein Befestigungselement auf, mittels welchem der Drehgeber an dem Gehäuse befestigt ist. In Figur 5 sind von dem Befestigungselement die zwei Stege 5, die zwei zweiten Ausnehmungen 4 sowie die zwei ersten Ausnehmungen 3 erkennbar, wohingegen andere Teile des Befestigungselementes von dem Drehgeber 21 verdeckt sind. Die Maschine weist weiterhin eine Maschinenwelle 24 auf, welche mit einer in Figur 5 nicht dargestellten Geberwelle drehfest verbunden ist.

## Patentansprüche

1. Befestigungselement (1), insbesondere Drehmomentstütze, zur Befestigung eines Drehgebers (21) mit einer Geberwelle an einem Gehäuse (22) aufweisend
- einen Ring (2), mittels welchem die Geberwelle umschließbar ist,
- zumindest zwei erste Ausnehmungen (3), mittels welchen das Befestigungselement (1) am Drehgeber (21) bzw. am Gehäuse (22) befestigbar ist,
- zumindest zwei zweite Ausnehmungen (4), mittels welchen das Befestigungselement (1) am Gehäuse (22) bzw. am Drehgeber (21) befestigbar ist,
- zumindest zwei Stege (5), welche sich von einem jeweiligen Verbindungsbereich (6) des Ringes (2) jeweils nach radial außen oder innen erstrecken und welche jeweils eine der zweiten Ausnehmungen (4) aufweisen,
**dadurch gekennzeichnet, dass**
- der jeweiligen Verbindungsbereich (6) in positiver Umfangsrichtung (30) näher an einer von zwei benachbarten ersten Ausnehmungen (3) angeordnet ist und
- sich der jeweilige Steg (6) in negativer Umfangsrichtung (31) in Richtung der anderen der zwei benachbarten ersten Ausnehmungen (3) erstreckt.

2. Befestigungselement (1) nach Anspruch 1,
wobei die jeweilige zweite Ausnehmung (4) im Bereich des Endes des jeweiligen Steges (5) in negativer Umfangsrichtung (31) angeordnet ist.

3. Befestigungselement (1) nach Anspruch 1 oder 2,
wobei der jeweilige Steg (5) in negativer Umfangsrichtung (31) außerhalb des jeweiligen Verbindungsbereichs (6) im Wesentlichen ringsegmentförmig ausgestaltet ist.

4. Befestigungselement (1) nach einem der vorherigen Ansprüche,
wobei sich der jeweilige Steg (5) in negativer Umfangsrichtung (31) bis zu der anderen der zwei benachbarten ersten Ausnehmungen (3) oder über die andere der zwei benachbarten ersten Ausnehmungen (3) hinaus erstreckt.

5. Befestigungselement (1) nach einem der vorherigen Ansprüche,
aufweisend zwei erste Ausnehmungen (3), zwei zweite Ausnehmungen (4) und zwei Stege (5), die sich jeweils paarweise diametral gegenüberliegen,
wobei der jeweilige Verbindungsbereich (6) in positiver Umfangsrichtung (30) um 30° bis 50°, vorzugsweise 40°, gegenüber der Mitte zwischen zwei benachbarten ersten Ausnehmungen (3) versetzt angeordnet ist, und
wobei sich der jeweilige Steg (5) ausgehend von dem jeweiligen Verbindungsbereich (6) in negativer Umfangsrichtung (31) auf einer Länge von 100° bis 120°, vorzugsweise 107,5° in Richtung der anderen der zwei benachbarten ersten Ausnehmungen (3) erstreckt.

6. Befestigungselement (1) nach einem der vorherigen Ansprüche,
wobei zumindest der jeweilige Steg (5), insb. das ganze Befestigungselement (1) aus Stahl, insb. Federstahl, ist.

7. Befestigungselement (1) nach einem der vorherigen Ansprüche,
aufweisend zumindest zwei weitere Stege (7), welche sich von einem jeweiligen weiteren Verbindungsbereich (8) des Ringes (2) jeweils nach radial außen oder innen erstrecken und welche jeweils eine der ersten Ausnehmungen (3) aufweisen.

8. Befestigungselement (1) nach Anspruch 7,
wobei sich der jeweilige weitere Steg (7) in axialer Richtung zum Drehgeber (21) bzw. zum Gehäuse (22) erstreckt und
wobei die jeweilige erste Ausnehmung (3) im Bereich des axialen Endes des jeweiligen weiteren Steges (7) angeordnet ist.

9. Maschine (23), insbesondere elektrische Maschine, aufweisend
- ein Gehäuse (22),
- einen Drehgeber (21),
- ein Befestigungselement (1) nach einem der vorherigen Ansprüche, mittels welchem der Drehgeber (21) an dem Gehäuse (22) befestigt ist, und
- eine Maschinenwelle (24), welche drehfest mit der Geberwelle verbunden ist.

10. Maschine (23) nach Anspruch 9, wobei die Maschine (23) einen Elektromotor oder einen Elektrogenerator umfasst.
